# EUROPÄISCHE PATENTSCHRIFT

(11) **EP 2 340 573 B1**
(45) Veröffentlichungstag und Bekanntmachung des Hinweises auf die Patenterteilung: **25.09.2013**
(21) Anmeldenummer: 09736366.7
(22) Anmeldetag: 07.10.2009
(51) Int. Cl.: H02N 2/10, H04N 5/225

(54) **MINIATURISIERTE PIEZOELEKTRISCH ANGETRIEBENE LAGERUNGSVORRICHTUNG**
MINIATURIZED PIEZOELECTRIC DRIVEN MOUNT DEVICE
DISPOSITIF DE LOGEMENT MINIATURE À ENTRAÎNEMENT PIÉZOÉLECTRIQUE

(30) Priorität: 10.10.2008 CH 16082008
(43) Veröffentlichungstag der Anmeldung: 06.07.2011
(73) Patentinhaber: Creaholic SA, 2503 Biel (CH)
(72) Erfinder: MOCK, Elmar, CH-2013 Colombier (CH); SIGRIST, Martin, CH-3270 Aarberg (CH)
(74) Vertreter: Frei Patent Attorneys
(86) Internationale Anmeldenummer: PCT/CH2009/000320
(87) Internationale Veröffentlichungsnummer: WO 2010/040242

(56) Entgegenhaltungen:
- WO-A1-00/30186
- US-A1- 2007 164 635
- US-A1- 2008 233 417
- US-A1- 2008 240 704

## Beschreibung

Die Erfindung bezieht sich auf eine miniaturisierte angetriebene Aufhängung oder Lagerungsvorrichtung, insbesondere zur Ausrichtung eines miniaturisierten Kameramodules, gemäss dem Oberbegriff des Patentanspruches 1.

### STAND DER TECHNIK

US 2006/0033818 zeigt eine Aufhängung für eine miniaturisiertes Kameramodul (im folgenden auch Mikrokameramodul genannt), welche das Zittern beim Halten einer Mobiltelefonkamera ausgleichen soll. Dazu ist das Kameramodul am hinteren Ende an einer flexiblen Aufhängung befestigt. Durch Aktuatoren kann das Kameramodul bewegt werden, wobei sich die Aufhängung biegt. EP 1 304 872 A1 zeigt die Ausrichtung eines Mikrokameramoduls durch Aktoren, welche selber auch die Stützen oder Halterungen für das Modul bilden.

WO 00/30186 A1 zeigt eine miniaturisierte angetriebene Lagerungsvorrichtung gemäss dem Oberbegriff von Patentanspruch 1.

Die bekannten Lösungen sind nachteilig, was die Lage der Massen bezüglich der Drehachsen, sowie die Lage der Bewegungsachse bezüglich der Optik und die Grösse der erzielbaren Bewegungen betrifft.

Andere Aufhängungen für optische Systeme, wie z.B. in der US 4,731,669 beschrieben, sind gross, schwer und offensichtlich nicht für eine Mikrokamera geeignet.

### DARSTELLUNG DER ERFINDUNG

Es ist deshalb Aufgabe der Erfindung, eine miniaturisierte angetriebene Lagerungsvorrichtung und eine Minikamera mit einer Lagerungsvorrichtung der eingangs genannten Art zu schaffen, welche die oben genannten Nachteile behebt.

Diese Aufgabe lösen eine miniaturisierte angetriebene Lagerungsvorrichtung und eine Minikamera mit den Merkmalen der entsprechenden Patentansprüche.

Die miniaturisierte angetriebene Lagerungsvorrichtung ist also zur Lagerung eines Trägerelements bezüglich eines Rahmenelements ausgebildet, und weist einen ersten Antrieb zur Drehung des Trägerelements um eine erste Achse und einen zweiten Antrieb zur Drehung des Trägerelements um eine zweite Achse auf. Dabei weist mindestens der erste Antrieb einen aktiven Antriebsteil und einen passiven, angetriebenen Teil auf, und ist der erste Antrieb ein piezoelektrischer Antrieb, bei welchem ein Resonator durch ein elektrisch gespeistes Piezoelement in Schwingung versetzbar ist, wobei Kontaktbereiche des Resonators durch eine oszillierende Bewegung den passiven Teil des Antriebs bezüglich des Antriebsteils antreiben. Damit kann eine sehr kleine und präzis steuerbare Aufhängung geschaffen werden.

Vorzugsweise weist der Antriebsteil eine flache Form auf, und verläuft die zweite Achse senkrecht zum Antriebsteil. Dies bedeutet also, dass die zweite Achse senkrecht zu einer Ebene, in welcher der Antriebsteil ausgedehnt ist, verläuft. Da der erste Antrieb flach ist, kann er, in Richtung der zweiten Achse gesehen, nahe am Trägerelement angeordnet werden, wodurch sich die Baugrösse der Lagerungsvorrichtung sehr klein gestalten lässt. Vorzugsweise ist zudem der passive Teil am Trägerelement befestigt.

Vorzugsweise durchstösst die zweite Achse die Ebene des Antriebsteils im Bereich des Antriebsteils selber. Detaillierter ausgedrückt bedeutet dies, dass die zweite Achse die konvexe Hülle der Projektion des Antriebsteils auf eine Ebene parallel zum Antriebsteil durchstösst. Dies hat zur Folge, dass die Massenträgheit des ersten Antriebs bei einer Drehung um die zweite Achse klein ist. In einer diesbezüglich optimierten Ausführungsform der Erfindung liegt der Schwerpunkt des Antriebsteils des ersten Antriebs vorzugsweise mindestens annähernd auf der zweiten Achse, ebenso der Schwerpunkt des Trägerelements.

Die Ausdehnung des flachen Antriebsteils in der Ebene seiner grössten Ausdehnung ist vorzugsweise mindestens drei bis fünf mal grösser als in einer Richtung senkrecht zu dieser Ebene. Das Trägerelement ist vorzugsweise in jeder Richtung kleiner als 20 mm, vorzugsweise in jeder Richtung kleiner als 10 mm.

Gemäß der Erfindung wird der erste Antrieb mit einem Zwischenelement, welches vom zweiten Antrieb angetrieben ist, mitbewegt. Das Zwischenelement ist bezüglich des Rahmenelements drehbar gelagert und ist durch den zweiten Antrieb angetrieben, und das Trägerelement ist bezüglich des Zwischenelements drehbar gelagert und durch den ersten Antrieb angetrieben. Der erste Antrieb, oder Trägerantrieb, ist also fest mit dem Zwischenelement verbunden, der zweite Antrieb, oder Aussenantrieb, ist fest mit dem Rahmenelement verbunden. Die erste und die zweite Achse verlaufen vorzugsweise senkrecht zueinander und bilden so eine kardanische Lagerung des Trägerelements bezüglich des Rahmenelements. Dabei kann die Drehung um die erste und/oder die zweite Achse, mittels beispielsweise Torsion eines elastischen Elementes oder mittels eines Gleitlagers stattfinden. Der Schwerpunkt des Trägerelements liegt vorzugsweise auf dem Schnittpunkt der beiden Achsen.

Nicht-erfindungsgemäße ist es aber auch möglich, auch den ersten Antrieb mit seinem Antriebsteil auf dem Rahmenelement anzuordnen, so dass er nicht mit dem Zwischenelement mitbewegt wird. Dabei greift der erste Antrieb vorzugsweise mindestens annähernd im Bereich der zweiten Achse am entsprechenden passiven Element am Trägerelement an. Dadurch verschiebt sich bei einer Drehung des Trägerelements um die zweite Achse der Kraftangriffspunkt des ersten Antriebs nicht wesentlich, bis zu einem gewissen Maximalwinkel funktionert der erste Antrieb auch trotz dieser Drehung. In einer dabei bevorzugten Variante ist zudem der erste Antrieb flexibel am Rahmenelement angeordnet, so dass er sich bei einer Verdrehung des Trägerelements um die zweite Achse ganz oder teilweise mitdrehen kann. Eine solche Anordnung, mit den aktiven Teilen der beiden Antriebe auf dem Rahmenelement, ist auch mit einer um mindestens zwei Achsen drehbaren elastischen oder flexiblen Aufhängung des Trägerelementes am Rahmenelement möglich.

In einer weiteren bevorzugten Ausführungsform der Erfindung sind beide Antriebe am Zwischenelement angeordnet und mit diesem mitbewegt. Dabei wird zwar auch der aktive Teil des zweiten Antriebs mitbewegt, aber es kann die Speisung des ersten und des zweiten Antriebs einfacher gestaltet werden.

In einer bevorzugten Ausführungsform der Erfindung ist der erste Antrieb wie ein piezoelektrischer (Linear)-Antrieb aufgebaut, bei welchem ein flacher Resonator sich stimmgabelartig mit zwei Armen parallel zu Ebene des Antriebsteils erstreckt, der Resonator durch ein elektrisch gespeistes Piezoelement in Schwingung versetzbar ist, wobei Kontaktbereiche des Resonators durch eine oszillierende Bewegung den passiven Teil des Antriebs bezüglich des Antriebsteils antreiben. Der passive Teil macht dabei nicht exakt eine lineare Bewegung, obwohl der Antriebsteil für eine solche geeignet wäre, sondern bewegt sich auf einer Kreisbahn um die Trägerachse. Der flache Resonator liegt in der Ebene des Antriebsteils respektive definiert diese Ebene. Vorzugsweise ist auch der zweite Antrieb in dieser Weise aufgebaut. Entsprechende piezoelektrische Antriebe sind in der WO 2006/000 118 offenbart, beispielsweise entsprechend den Ausführungsformen in den Figuren 35-40, insbesondere Ausführungsformen mit nur einem Antriebs- oder Resonatorblech. Es ist damit - im Vergleich mit reinen oder gegebenenfalls auch über einen Hebel wirkenden Piezoelementen - eine relativ lange Auslenkung des Antriebs realisierbar, und damit auch ein relativ grosser Auslenkwinkel um die erste und zweite Achse.

Der erste, aber insbesondere der zweite Antrieb kann auch wie einer der Antriebe der WO 02/099 844, WO 03/036 786 oder WO 03/079 462 ausgestaltet sein,
also mit einem um die Zwischenelementsachse 31 herum angeordneten Drehantrieb. Damit ist ein länglicher Aufbau der gesamten Lagerungsvorrichtung möglich, was für bestimmte Anwendungen von Vorteil ist.

In einer bevorzugten Ausführungsform der Erfindung weist die Lagerungsvorrichtung ein im Trägerelement angeordnetes Mikrokameramodul auf. Dabei kann das Mikrokameramadul respektive ein Gehäuse oder eine Halterung des Mikrokameramoduls selber das Trägerelement bilden. Dabei verlaufen die erste und die zweite Achse vorzugsweise durch den Brennpunkt des Mikrokameramoduls, wodurch sich der Einfluss auf die optische Abbildung beim Verdrehen des Mikrokameramoduls verbessert. Die erste und die zweite Achse verlaufen zudem vorzugsweise senkrecht zueinander und bilden so eine kardanische Lagerung des Mikrokameramoduls.

Das Mikrokameramodul selber kann auch einen oder mehrere Motoren von vorzugsweise flacher Bauart aufweisen, um die Schärfe und/oder eine Zoomeinstellung zu verstellen, wie in der schon zitierten WO 2006/000 118 beschrieben. Damit ist es möglich, eine sehr kleine bewegliche Lagerung eines Mikrokameramoduls herzustellen, die einen relativ grossen Auslenkungsbereich aufweist. Beispielsweise ist die Ausdehnung der Lagerungsvorrichtung mit dem Mikrokameramodul in jeder Richtung kleiner als 20 mm, vorzugsweise in jeder Richtung kleiner als 10 mm.

Die Geschwindigkeit eines wie beschrieben aufgebauten piezoelektrischen Antriebs beträgt beispielsweise 1.5° in weniger als 2 Millisekunden. Dieser Winkelbereich entspricht etwa dem Zittern eines von Hand gehaltenen Gehäuses, typischerweise eines Mobiltelefons, in welchem das Mikrokameramodul angeordnet ist. Während einer Aufnahmedauer des Bildsensors von beispielsweise 20 bis 30 Millisekunden (entsprechend einer Bildrate von ca. 30 Bildern/Sekunde) kann also die Orientierung der Mikrokamera 10 bis 15 mal nachgeführt werden. Es ist also möglich, das Bild auf dem Bildsensor während der Aufnahme zu stabilisieren, und zwar während einer Videoaufnahme und auch während einer längeren Einzelaufnahme. In einer bevorzugten Ausführungsform der Erfindung weist eine entsprechende Regelvorrichtung Orientierungssensoren auf, beispielsweise ein miniaturisiertes, beispielsweise elektromechanisches Gyroskop oder Beschleunigungssensoren, welche eine Verdrehung des Gehäuses um mindestens zwei Achsen erfassen, und steuert die Lagerungsvorrichtung an, so dass diese die Verdrehung durch Drehen der Mikrokamera kompensiert.

In einer weiteren Anwendung ist es dank des grossen Auslenkungsbereiches des beschriebenen Antriebes möglich, auch bei grösseren Auslenkungen die Mikrokamera in derselben Ausrichtung zu halten, beispielsweise wenn der Benutzer der Kamera läuft. Dies kann zur Stabilisierung von Videoaufnahmen verwendet werden, indem zwischen zwei Videoframes die Kameraorientierung so korrigiert wird, dass der erfasste Bildausschnitt möglichst konstant bleibt. Die Korrektur der Ausrichtung kann auch hier anhand von Orientierungssensoren geschehen, oder durch Vergleich der erfassten Videoframes, respektive von Schlüsselmerkmalen innerhalb der Videoframes. Dabei ist für Videoaufnahmen an sich schon bekannt, einen grösseren Bildausschnitt als anschliessend gespeichert wird aufzunehmen, und den gespeicherten Ausschnitt (oder Frame) so zu wählen auszuschneiden, dass eine Bewegung bezüglich des vorherigen Ausschnittes kompensiert wird. Dieses bekannte Vorgehen ist aber bezüglich der Grösse der kompensierbaren Bewegung begrenzt, und erfordert auch eine grösserer (teurere) Bildsensorfläche. Die beschriebene Korrektur durch Ausrichten der Mikrokamera kann dieses bekannte Ausschneiden von Frames ergänzen und/oder ersetzen. Beispielsweise wird, nachdem ein Frame zur Kompensation einer Bewegung ausgeschnitten worden ist, diese Bewegung durch Ausrichten der Mikrokamera kompensiert. Dadurch ist die erwartete Position des folgenden Frames (falls sich die Kamera nicht in der Zwischenzeit weiter bewegt hat) wieder in der Mitte des gesamten Bildes. Dieses Korrigieren von Bildausschnitt und Kamerausrichtung wird für jedes Einzelbild der Videoaufnahme wiederholt. Vorzugsweise wird dabei, wenn die Auslenkung der Mikrokamera respektive des Gehäuses ein gewisses Mass übersteigt, angenommen, dass der Benutzer einen Kameraschwenk ausführt, und die Mikrokamera wieder in die Mittenposition gefahren.

Die Mikrokameramodul kann nicht nur in einem Handgerät wie einem Mobiltelefon oder einem PDA angeordnet sein, sondern auch beispielsweise in einem Laptop-Computer oder am Bildschirm eines Desktop-Computers. Die Kamera mitsamt der Lagerungsvorrichtung kann dank der kleinen Ausmasse hinter einer flachen, durchsichtigen Blende angeordnet werden, und kann zum automatischen Verfolgen beispielsweise eines Gesichtes angesteuert werden. Entsprechende Bildanalyse- und Tracking-Software ist bekannt, die vorliegende Erfindung bietet die Möglichkeit einer physischen Umsetzung der Tracking-Funktion auf kleinstem Raum.

Für eine Minikamera ist die Lagerungsvorrichtung in einem auf der Innenseite zumindest abschnittsweise kugelförmigen Kameragehäuse angeordnet, ist und ein zu der Kugelform des Gehäuses konzentrische Kugelkörper beweglich im Kameragehäuse angeordnet, wobei der Kugelkörper am Trägerelement befestigt und durch die Drehung des Trägerelements bezüglich des Kameragehäuses mit gedreht wird. Dazu ist natürlich das Rahmenelement am Kameragehäuse befestigt. Das Kameragehäuse weist vorzugsweise eine Öffnung auf, hinter welcher der Kugelkörper durch Bewegen der Kugelschale wahlweise sichtbar oder abgedeckt ist.

Die Lagerungsvorrichtung ist dazu so im Kameragehäuse angeordnet, dass die erste und die zweite Achse durch den Kugelmittelpunkt des Kameragehäuses verlaufen. Der Kugelkörper ist also um zwei Achsen drehbar. Der Kugelkörper weist vorzugsweise eine optisch durchlässige Pupillenöffnung auf der optischen Achse des Mikrokameramoduls auf. Damit liegt eine kompakte Minikamera vor, welche in zwei Achsen ausrichtbar ist, und bei welcher die Blickrichtung entsprechend der Ausrichtung der Pupillenöffnung erkennbar ist.

Vorzugsweise weist die Vorrichtung zusätzlich eine Kugelschale auf, welche um eine Blendenachse drehbar zwischen dem Kugelkörper und dem Kameragehäuse angeordnet und durch einen dritten Antrieb angetrieben ist. Diese Achse ist vorzugsweise koaxial mit einer der Achsen der Lagerungsvorrichtung, insbesondere mit der horizontalen Neigeachse oder Kippachse. So kann die Kugelschale über den Kugelkörper und die Pupillenöffnung gedreht werden, wodurch die Pupillenöffnung abgedeckt wird.

In einer weiteren bevorzugten Ausführungsform der Erfindung liegen die Kugelschale, der Kugelkörper und das zweiachsig oder kardanisch gelagerte Trägerelement ohne das Mikrokameramodul vor. Damit kann ein bewegliches und verschliessbares Auge gestaltet werden, beispielsweise für Puppen, robotische "Entertraining devices" oder Spielzeugroboter. In einer anderen bevorzugten Ausführungsform der Erfindung liegt auch die Kugelschale nicht vor. Damit kann der Kugelkörper, evtl, mit daran angeordneten Displayelementen oder mechanischen Zeigeelementen zur Anzeige einer Richtung im Raum oder für andere Zwecke verwendet werden.

In einer anderen bevorzugten Ausführungsform der Erfindung ist anstelle einer Kamera eine Lichtquelle zur Erzeugung eines gerichteten Lichtstrahls, beispielsweise ein miniaturisiertes Lasermodul (Laser mit Austrittsoptik), im Trägerelement angeordnet und somit kardanisch und steuerbar aufgehängt. Durch entsprechende Ansteuerung der Antriebe der beiden Achsen der Aufhängung lässt sich innerhalb der Maximalauslenkung eine beliebige Kurve oder Figur zeichnen, welche bei eingeschaltetem Laser auf einer Fläche sichtbar wird. Damit kann beispielsweise ein Zeigegerät nach Arte eines Laserpointers realisiert werden, welches anstelle nur eines Punktes eine Figur auf eine Fläche zeichnet. Vorzugsweise wird die Figur als Linienzug gezeichnet, wie bei einem Vektordisplay. Dabei kann optional die Intensität des Lasers synchron mit dem Zeichnen der Linien moduliert werden. Alternativ kann die Lagerungsvorrichtung ein regelmässiges Raster aus mehreren Bildzeilen zeichnen, wobei das Bild durch Modulation der Lichtintensität erzeugt wird.

In einer weiteren bevorzugten Ausführungsform der Erfindung ist die Lagerungsvorrichtung mit einem Lasermodul ebenfalls in einem Laserpointer angeordnet, wird aber so angesteuert, dass ein Zittern der Person, welche den Laserpointer hält, kompensiert wird. Die Erfassung des Zitterns kann wie bei einer Kamera mit Beschleunigungs- oder Lagesensoren geschehen. Die Steuerung erfasst eine Zitterbewegung und bewegt das Lasermodul derart, dass die Ausrichtung des Laserstrahls möglichst unverändert bleibt. Damit nur das Zittern und keine langsameren, gewollten Bewegungen eliminiert wird, wird beispielsweise die erfasste Lage mit einem Hochpassfilter gefiltert. Dieses verhindert, dass langsame Bewegungen erfasst und kompensiert werden.

In weiteren bevorzugten Ausführungsformen der Erfindung liegen in einem portablen oder stationären Gerät zwei der beschriebenen Mikrokameramodule vor, welche von einander beabstandet sind. Dadurch ist eine stereoskopische Bilderfassung möglich, sei es für Stereo-Videos, Distanzmessung (Telemetrie), Positionserfassung etc. Vorzugsweise weisen die Mikrokameramodule dazu Winkelerfassungsmittel auf, welche die Ausrichtung oder Blickrichtung erfassen. Diese Winkelerfassungsmittel können Winkelsensoren sein, oder von der Steuerung der Antriebe abgeleitet sein, oder durch Bildverarbeitung durch Vergleich mehrerer Bilder eine Drehwinkeldifferenz bestimmen.

In einer Variante einer solchen Anordnung sind die beiden Kameras um eine gemeinsame zweite Achse drehbar (beispielsweise entsprechend einer Neigung der Kameranordnung) und mechanisch aneinander gekoppelt, so dass sie sich synchron um diese Achse drehen, und werden dazu von einem einzigen Antrieb angetrieben.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Ansicht eines Mikrokameramoduls in einer Lagerungsvorrichtung;
- Figur 2 und 3: dieselbe Ansicht, wobei einige Teile entfernt sind;
- Figur 4: einen Querschnitt durch ein Mikrokameramodul;
- Figur 5: eine Minikamera;
- Figur 6: einen Querschnitt durch die Minikamera; und
- Figur 7 und 8: eine weitere Ausführungsform einer Minikamera.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

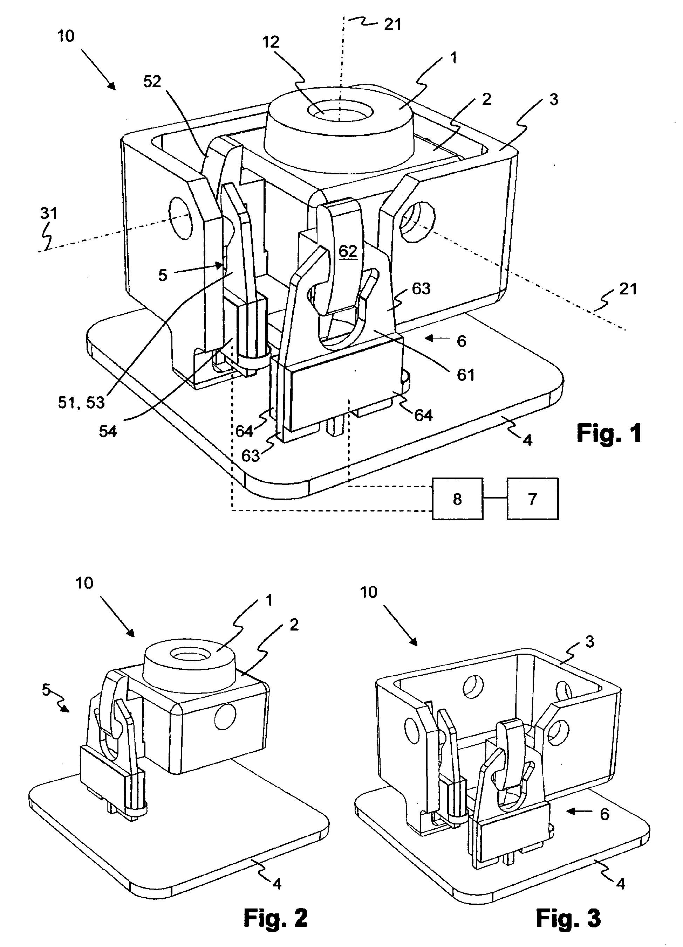

**Figur 1** zeigt eine Ansicht eines Mikrokameramoduls 1 in einer Lagerungsvorrichtung 10. Das Mikrokameramodul 1 ist an einem Trägerelement 2 angebracht, oder selber als Trägerelement 2 ausgebildet, Das Trägerelement 2 ist um eine Trägerachse 21 drehbar in einem Zwischenelement 3 gelagert und bezüglich des Zwischenelements 3 mittels eines ersten Antriebs oder Trägerantriebs 5 angetrieben. Das Zwischenelement 3 ist bezüglich eines Rahmenelements 4 (in der Figur nur ansatzweise dargestellt) um eine Zwischenelementsachse drehbar 31 gelagert und bezüglich des Rahmenelements 4 mittels eines zweiten Antriebs oder Aussenantriebs 6 angetrieben. Die Trägerachse 21 und die Zwischenelementsachse 31 verlaufen vorzugsweise senkrecht durcheinander und vorzugsweise auch durch den Brennpunkt oder Fokuspunkt 14 des Mikrokameramoduls 1. Das Trägerelement 2 ist also bezüglich des Rahmenelements 4 kardanisch aufgehängt.

Die Antriebe sind gleichartig aufgebaut und werden im folgenden anhand des Aussenantriebs 6 erklärt, wobei analoges für den Trägerantrieb 5 gilt: Der Aussenantrieb 6 weist einen aktiven Teil oder Antriebsteil 61 auf, und einen passiven Teil 62. Der Antriebsteil 61 weist einen flachen Resonator 63 aus, beispielsweise aus einem Metallblech, und einen oder mehrere Piezoelemente 64. Das oder die Piezoelemente 64 werden durch einen nicht gezeichneten Spannungserzeuger mit einer elektrischen Spannung angeregt. Die dadurch entstehende Schwingung des Resonators 63 erzeugt an Kontaktbereichen des Resonators, welche mit dem passiven Teil 62 zumindest zeitweise in Berührung stehen, intermittierende Kontaktkräfte. Durch die Wahl der Anregungsfrequenz können Schwingungsmodi gewählt werden, bei denen die Bewegung der Kontaktbereiche wahlweise den passiven Teil 62 in die eine oder die andere Richtung treibt. Weitere Details zu dieser Art Antrieb sind der WO 2006/000 118 zu entnehmen.

Der Antrieb ist grundsätzlich als Linearantrieb aufgebaut. Die Bewegung des passiven Teils 62 ist durch die Drehung um die Zwischenelementsachse 31 vorgegeben und ist also eine Bewegung tangential zur Verbindungsgeraden zwischen der Zwischenelementsachse 31 und den Kontaktbereichen. Der passive Teil 62 ist am Zwischenelement 3 befestigt oder ist. selber Teil des Zwischenelements 3. In analoger Weise treibt der Trägerantrieb 5 das passive Teil 52 des Trägerantriebs 5, welches am Trägerelement 2 befestigt ist, an. Der Trägerantrieb 5 selber ist mit seinem aktiven Teil oder Antriebsteil 51 am Zwischenelement 3 befestigt und treibt das Trägerelement 2 bezüglich des Zwischenelements 3 an.

Ein optionaler Lagesensor 7 ist zum Erfassen der Orientierung eines portablen Gerätes, in welchem die Lagerungsvorrichtung 10 angeordnet ist, vorgesehen. Aufgrund dieser Orientierung oder anderer Steuersignale steuert eine Steuerung 8 über schematisch eingezeichnete Steuerleitungen die Antriebsteile 51, 61 an, um die gewünschten Bewegungen zu erzielen.

**Figur 2** zeigt, der besseren Verständlichkeit halber, grundsätzlich dieselbe Ansicht wie Figur 1, jedoch ohne das Zwischenelement 3 und den zweiten Antrieb 6. **Figur 3** zeigt analog die Ansicht ohne Trägerelement 2 und Mikrokameramodul 1.

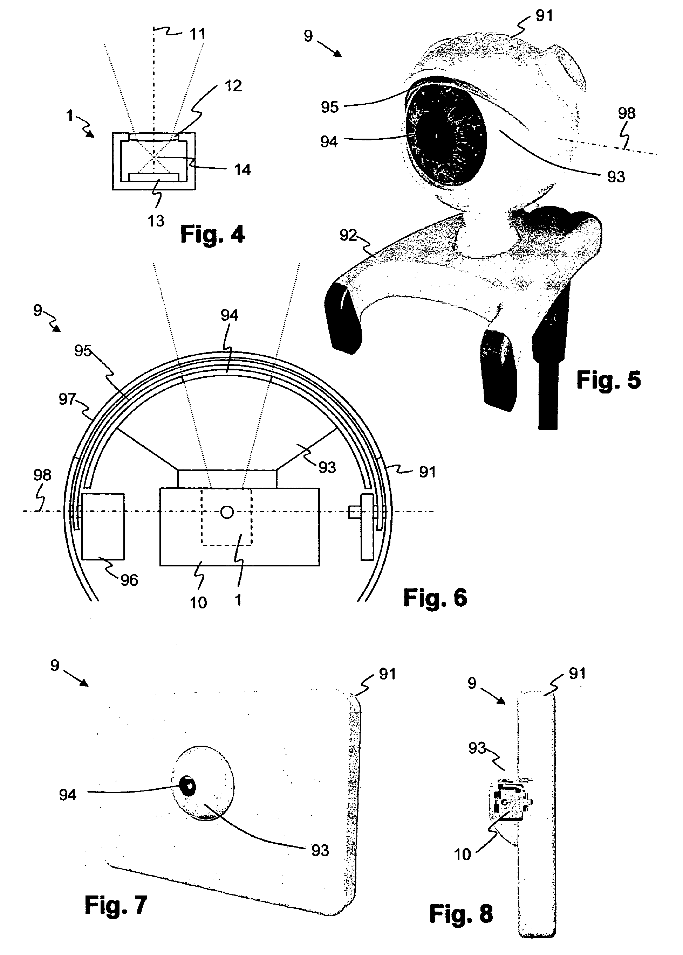

**Figur 4** zeigt schematisch einen Querschnitt durch ein Mikrokameramodul 1, mit einer Linse 12, einem Bildsensor 13 und einem Strahlengang entlang einer optischen Achse 11 des Mikrokameramoduls 1. Bei der optischen Abbildung auf den Bildsensor 13 bildet sich der Brennpunkt oder Fokuspunkt 14.

**Figur 5** zeigt eine Minikamera 9 mit einer darin angebrachten, nicht sichtbaren Lagerungsvorrichtung 10 in einer Ansicht, **Figur 6** im Querschnitt durch eine horizontale Ebene durch den Kugelmittelpunkt des Kameragehäuses 91. Das Kameragehäuse 91 ist beispielsweise mit einer Halterung 92 an einem Bildschirm befestigbar. Die Lagerungsvorrichtung 10 ist im Innern des Kameragehäuse 91 in der folgenden Weise angeordnet: Das bewegliche Trägerelement 2 trägt neben einer Mikrokamera 1 einen aussen kugelabschnittsförmigen Iristräger 93, welcher in im innen kugelförmig geformten Kameragehäuse 91 um zwei Achsen drehbar angeordnet ist. Bei der Rotation der Lagerungsvorrichtung 10 um seine beiden Achsen Trägerachse 21 und Zwischenelementsachse 31 dreht sich der Iristräger 93 innerhalb des Kameragehäuses 91 mit, analog zu einem Auge in der Augenhöhle. Der Iristräger 93 weist eine Pupille 94, d.h. einen offenen oder durchsichtigen Bereich auf, durch welchen die mit dem Trägerelement 2 und dem Iristräger 93 mitbewegte Mikrokamera 1 nach aussen sieht.

Vorzugsweise ist eine Kugelschale oder Blende 95 ähnlich einem Lid zwischen dem Iristräger 93 und dem Kameragehäuse 91 drehbar angeordnet, wobei die Drehachse oder Blendenachse 98 vorzugsweise mit der horizontalen (Kipp-)Achse der Lagerungsvorrichtung 10 respektive des Mikrokameramoduls 1 zusammenfällt. Ein entsprechender Antrieb oder Blendenantrieb 96 zur Bewegung der Blende 95 ist vorzugsweise ein bidirektionaler piezoelektrischer Antrieb der gleichen Art wie bei der Lagerungsvorrichtung 10, oder gemäss einer der eingangs zitierten drei Patentveröffentlichungen. Die Blende 95 und/oder der Iristräger 93 werden durch eine Öffnung im Kameragehäuse 91 sichtbar. Zum Schutz der bewegten Teile Iristräger 93 und Blende 95 ist als Teil des Kameragehäuses 91 vorzugsweise eine transparente Schutzabdeckung 97 in der Öffnung angebracht.

Mit der miniaturisierten Lagerungsvorrichtung 10 kann das Kameragehäuse 91 sehr klein gehalten werden, beispielsweise mit einem Aussendurchmesser von 18 mm, also weniger als 20 mm oder 25 mm oder 30 mm.

**Figur 7** und **8** zeigen eine weitere Ausführungsform einer Minikamera in einer Lagerungsvorrichtung 10, welche in einem flachen Grundgehäuse 91 angeordnet ist, und ebenfalls durch die Orientierung des Iristrägers 93 die Blickrichtung der Kamera sichtbar macht. Durch die kleine Konstruktion der Lagerungsvorrichtung 10 kann das gesamte Gerät weniger tief sein, als es eine Kugelform des Iristrägers 93 erfordern würde.

### BEZUGSZEICHENLISTE

| | | | |
|---|---|---|---|
| 1 | Mikrokameramodul | 53, 63 | Resonator |
| 11 | optische Achse | 54, 64 | Piezoelement |
| 12 | Linse | 7 | Lagesensor |
| 13 | Bildsensor | 8 | Steuerung |
| 14 | Brennpunkt, Fokuspunkt | 9 | Minikamera |
| 2 | Trägerelement | 91 | Kameragehäuse |
| 21 | Trägerachse | 92 | Halterung |
| 3 | Zwischenelement | 93 | Iristräger, Kugelkörper |
| 31 | Zwischenelementsachse | 94 | Pupille |
| 4 | Rahmenelement | 95 | Blende, Kugelschale |
| 5 | Trägerantrieb | 96 | Blendenantrieb |
| 6 | Aussenantrieb | 97 | Schutzabdeckung |
| 51, 61 | Antriebsteil | 98 | Blendenachse |
| 52, 62 | passives Teil | 10 | Lagerungsvorrichtung |

## Patentansprüche

1. Miniaturisierte angetriebene **Lagerungsvorrichtung** (10) zur Lagerung eines Trägerelements (2) bezüglich eines Rahmenelements (4), aufweisend einen ersten Antrieb (5) zur Drehung des Trägerelements (2) um eine erste Achse (21) und einen zweiten Antrieb (6) zur Drehung des Trägerelements (2) um eine zweite Achse (31),
wobei mindestens der erste Antrieb (5) einen aktiven Antriebsteil (51) und einen passiven, angetriebenen Teil (52) aufweist, wobei der erste Antrieb (5) als piezoelektrischer Antrieb aufgebaut ist, bei welchem ein Resonator (53) durch ein elektrisch gespeistes Piezoelement (54) in Schwingung versetzbar ist, wobei Kontaktbereiche des Resonators (53) durch eine oszillierende Bewegung den passiven Teil (52) des Antriebs bezüglich des aktiven Antriebsteils (51) antreiben, **dadurch gekennzeichnet, dass** der erste Antrieb (5) mit einem Zwischenelement (3), welches vom zweiten Antrieb (6) angetrieben ist, mitbewegt wird.

2. Lagerungsvorrichtung (10) nach Anspruch 1, wobei die zweite (31) Achse die Ebene des aktiven Antriebsteils (51) des ersten Antriebs (5) im Bereich des aktiven Antriebsteils (51) durchstösst.

3. Lagerungsvorrichtung (10) nach einem der bisherigen Ansprüche, wobei das Trägerelement (2) in jeder Richtung kleiner als 20 mm, vorzugsweise in jeder Richtung kleiner als 10 mm ist.

4. Lagerungsvorrichtung (10) nach einem der bisherigen Ansprüche, wobei auch der zweite Antrieb (6) einen aktiven Antriebsteil (61) und einen passiven, angetriebenen Teil (62) aufweist und die passiven Antriebsteile (52, 62) des ersten und des zweite Antriebs (5, 6) beide am Zwischenelement (3) angeordnet und mit diesem mitbewegt sind.

5. Lagerungsvorrichtung (10) nach einem der bisherigen Ansprüche, wobei die Drehung um die erste und/oder die zweite Achse (21, 31) mittels Torsion eines elastischen Elementes oder mittels eines Gleitlagers stattfindet.

6. Lagerungsvorrichtung (10) nach einem der bisherigen Ansprüche, wobei der erste Antrieb (5) einen flachen Resonator aufweist, der sich stimmgabelartig mit zwei Armen parallel zu Ebene des Antriebsteils (51) erstreckt.

7. Lagerungsvorrichtung (10) nach einem der bisherigen Ansprüche, aufweisend ein im Trägerelement (2) angeordnetes Mikrokameramodul (1).

8. Lagerungsvorrichtung (10) nach Anspruch 7, wobei die erste und die zweite Achse (21, 31) durch den Brennpunkt (14) des Mikrokameramoduls (1) verlaufen, und die erste und die zweite Achse (21, 31) senkrecht zueinander verlaufen und so eine kardanische Lagerung bilden.

9. Lagerungsvorrichtung (10) nach Anspruch 7 oder 8, wobei die Ausdehnung der Lagerungsvorrichtung (10) mit dem Mikrokameramodul (1) in jeder Richtung kleiner als (20) mm, vorzugsweise in jeder Richtung kleiner als (10) mm ist.

10. **Minikamera** (9) mit einer Lagerungsvorrichtung (10) nach einem der Ansprüche 7 bis 9, wobei die Lagerungsvorrichtung (10) in einem auf der Innenseite zumindest abschnittsweise kugelförmigen Kameragehäuse (91) angeordnet ist, und ein zu der Kegelform des Gehäuses konzentrischer Kugelkörper (93) beweglich im Kameragehäuse (91) angeordnet ist, wobei der Kugelkörper (93) am Trägerelement (2) befestigt und durch die Drehung des Trägerelements (2) bezüglich des Kameragehäuses (91) mit gedreht wird.

11. Minikamera (9) nach Anspruch 10, wobei der Kugelkörper (93) eine Pupillenöffnung (94) auf der optischen Achse (11) des Mikrokameramoduls (1) aufweist, durch welche der Strahlengang des Mikrokameramoduls (1) verläuft.

12. Minikamera (9) nach Anspruch 10 oder 11, aufweisend eine Kugelschale (95), welche um eine Blendenachse (98) drehbar zwischen dem Kugelkörper (93) und dem Kameragehäuse (91) angeordnet und durch einen dritten Antrieb (96) angetrieben ist.

13. Minikamera (9) nach Anspruch 10 oder 11 oder 12, wobei das Kameragehäuse (91) eine Öffnung aufweist, hinter welcher der Kugelkörper (93) durch Bewegen der Kugelschale (95) wahlweise sichtbar oder abgedeckt ist.

14. Bewegliches und optional verschliessbares **mechanisches Auge,** aufweisend eine um zwei Achsen drehbare Lagerungsvorrichtung (10) nach einem der Ansprüche 1 bis 6, wobei die Lagerungsvorrichtung (10) in einem auf der Innenseite zumindest abschnittsweise kugelförmigen Gehäuse (91) angeordnet ist, und ein zu der Kugelform des Gehäuses konzentrischer Kugelkörper (93) beweglich im Gehäuse (91) angeordnet ist, wobei der Kugelkörper (93) am Trägerelement (2) befestigt und durch die Drehung des Trägerelements (2) bezüglich des Gehäuses (91) mit gedreht wird.

15. **Portables Zeigegerät** mit einer Lagerungsvorrichtung (10) nach einem der Ansprüche 1 bis 6, wobei im Trägerelement (2) der Lagerungsvorrichtung (10) eine Lichtquelle zur Erzeugung eines gerichteten Lichtstrahls angeordnet ist, deren Abstrahlrichtung durch Ansteuerung der Lagerungsvorrichtung (10) steuerbar ist.

## Claims

1. Miniaturised driven **supporting device** (10) for supporting a carrier element (2) relative to a frame element (4), comprising a first drive (5) for rotating the carrier element (2) around a first axis (21) and a second drive (6) for rotating the carrier element (2) around a second axis (31),
wherein at least the first drive (5) comprises an active driving part (51) and a passive, driven part (52), wherein the first drive (5) is designed as a piezoelectric drive, in which a resonator (53) is capable of being made to oscillate by an electrically powered piezo element (54), wherein contact zones of the resonator by an oscillating movement drive the passive part (52) of the drive relative to the active driving part (51),
**characterised in that** the first drive (5) is moved along with an intermediate element (3), which is driven by the second drive (6).

2. Supporting device (10) in accordance with claim 1, wherein the second axis (31) passes through the plane of the active drive part (51) of the first drive (5) in the zone of the active drive part (51).

3. Supporting device (10) in accordance with one of the preceding claims, wherein the carrier element (2) in every direction is smaller than 20 mm, in preference in every direction is smaller than 10 mm.

4. Supporting device (10) in accordance with one of the preceding claims, wherein also the second drive (6) comprises an active drive part (61) and a passive, driven part (62) and the passive drive parts (52, 62) of the first and the second drive (5, 6) are both arranged on the intermediate element (3) and are moved along with it.

5. Supporting device (10) in accordance with one of the preceding claims, wherein the rotation around the first and/or the second axis (21, 31) takes place by means of torsion of an elastic element or by means of a slide bearing.

6. Supporting device (10) in accordance with one of the preceding claims, wherein the first drive (5) comprises a flat resonator, which in the manner of a tuning fork extends with two arms parallel to the plane of the drive part (51).

7. Supporting device (10) in accordance with one of the preceding claims, comprising a micro-camera module (1) arranged in the carrier element (2).

8. Supporting device (10) in accordance with claim 7, wherein the first and the second axis (21, 31) extend through the focal point (14) of the micro-camera module (1), and the first and the second axis (21, 31) extend vertically to one another and thus form a cardanic support.

9. Supporting device (10) in accordance with claim 7 or 8, wherein the extent of the supporting device (10) with the micro-camera module (1) in every direction is less than 20 mm, in preference in every direction is less than 10 mm.

10. **Miniature camera** (9) with a supporting device (10) in accordance with one of the claims 7 to 9, wherein the supporting device (10) is arranged in a camera housing (91) the inside of which is spherical at least in sections, and a spherical body (93) concentric with the spherical shape of the housing is movably arranged in the camera housing (91), wherein the spherical body (93) is attached to the carrier element (2) and by the rotation of the carrier element (2) is rotated along with it relative to the camera housing (91).

11. Miniature camera (9) in accordance with claim 10, wherein the spherical body (93) comprises an aperture diaphragm (94) on the optical axis (11) of the micro-camera module (1), through which the optical path of the micro-camera module (1) passes.

12. Miniature camera (9) in accordance with claim 10 or 11, comprising a spherical shell (95), which is arranged as rotatable around an aperture axis (98) between the spherical body (93) and the camera housing (91) and which is driven by a third drive (96).

13. Miniature camera in accordance with claim 10 or 11 or 12, wherein the camera housing (91) comprises an opening, behind which the spherical body (93) by moving the spherical shell (95) is optionally visible or covered.

14. Movable and optionally closable **mechanical eye,** comprising a supporting device (10) rotatable around two axes in accordance with one of the claims 1 to 6, wherein the supporting device (10) is arranged within a spherical housing (91), which on the inside is spherical at least in sections, and a spherical body (93) concentric with the spherical shape of the housing is arranged as movable in the housing (91), wherein the spherical body (93) is attached to the carrier element (2) and by the rotation of the carrier element (2) is rotated along with it relative to the housing (91).

15. **Portable display device** with a supporting device (10) in accordance with one of the claims 1 to 6, wherein in the carrier element (2) of the supporting device (10) a light source for producing a directed light beam is arranged, the beam direction of which is capable of being controlled by driving the supporting device (10).

## Revendications

1. Ensemble de palier (10) entraîné et miniaturisé destiné à monter un élément de support (2) par rapport à un élément de bâti (4) et présentant un premier entraînement (5) permettant de faire tourner l'élément de support (2) autour d'un premier axe (21) et un deuxième entraînement (6) permettant de faire tourner l'élément de support (2) autour d'un deuxième axe (31),
au moins le premier entraînement (5) présentant une partie d'entraînement (51) active et une partie entraînée (52) passive, le premier entraînement (5) étant constitué comme entraînement piézoélectrique dans lequel un résonateur (53) peut être mis en vibration par un piézoélément (54) alimenté en électricité,
des parties de contact du résonateur (53) entraînant par déplacement d'oscillation la partie passive (52) de l'entraînement par rapport à la partie d'entraînement (51) active,
**caractérisé en ce que**
le premier entraînement (5) est entraîné conjointement avec un élément intermédiaire (3) entraîné par le deuxième entraînement (6).

2. Ensemble de montage (10) selon la revendication 1, dans lequel le deuxième axe (31) traverse le plan de la partie d'entraînement (51) active du premier entraînement (5) au niveau de la partie d'entraînement (51) active.

3. Ensemble de montage (10) selon l'une des revendications précédentes, dans lequel l'élément de support (2) est plus petit que 20 mm dans chaque direction et de préférence plus petit que 10 mm dans chaque direction.

4. Ensemble de montage (10) selon l'une des revendications précédentes, dans lequel le deuxième entraînement (6) présente également une partie d'entraînement (61) active et une partie entraînée (62) passive, les parties entraînées (52, 62) passives du premier et du deuxième entraînement (5, 6) étant toutes deux disposées sur l'élément intermédiaire (3) et entraînées conjointement avec ce dernier.

5. Ensemble de montage (10) selon l'une des revendications précédentes, dans lequel la rotation autour du premier et/ou la rotation autour du deuxième axe (21, 31) a lieu par torsion d'un élément élastique ou au moyen d'un palier coulissant.

6. Ensemble de montage (10) selon l'une des revendications précédentes, dans lequel le premier entraînement (5) présente un résonateur plat qui s'étend en fourche par deux bras parallèles au plan de la partie d'entraînement (51).

7. Ensemble de montage (10) selon l'une des revendications précédentes, présentant un module (1) de microcaméra disposé dans l'élément de support (2).

8. Ensemble de montage (10) selon la revendication 7, dans lequel le premier et le deuxième axe (21, 31) passent par le point focal (14) du module (1) de microcaméra, le premier et le deuxième axe (21, 31) étant perpendiculaires l'un à l'autre et formant ainsi un montage à la Cardan.

9. Ensemble de montage (10) selon les revendications 7 ou 8, dans lequel l'ensemble de montage (10) s'étend avec le module (1) de microcaméra sur moins de 20 mm dans chaque direction et de préférence sur moins de 10 mm dans chaque direction.

10. Minicaméra (9) présentant un ensemble de montage (10) selon l'une des revendications 7 à 9,
l'ensemble de montage (10) étant disposé dans un boîtier (91) de caméra dont certaines parties de la surface intérieure sont de forme sphérique,
un corps sphérique (93) concentrique par rapport à la forme de la sphère du boîtier étant disposé de manière mobile dans le boîtier (91) de la caméra,
le corps sphérique (93) étant fixé sur l'élément de support (2) et étant entraîné par rapport au boîtier (91) de la caméra en rotation conjointe avec la rotation de l'élément de support (2).

11. Minicaméra (9) selon la revendication 10, dans laquelle le corps sphérique (93) présente sur l'axe optique (11) du module (1) de microcaméra une ouverture (94) en pupille traversé par le parcours des rayons du module (1) de microcaméra.

12. Minicaméra (9) selon les revendications 10 ou 11, présentant une coquille sphérique (95) disposée à rotation autour d'un axe (98) d'obturateur entre le corps sphérique (93) et le boîtier (91) de la caméra et entraîné par un troisième entraînement (96).

13. Minicaméra (9) selon les revendications 10, 11 ou 12, dans laquelle le boîtier (91) de la caméra présente une ouverture derrière laquelle le corps sphérique (93) peut être sélectivement rendu visible ou être couvert par déplacement de la coquille sphérique (95).

14. Oeil mécanique mobile et facultativement apte à être fermé,
présentant un ensemble de montage (10) apte à tourner autour de deux axes selon l'une des revendications 1 à 6,
l'ensemble de montage (10) étant disposé dans un boîtier (91) de caméra dont certaines parties de la surface intérieure sont de forme sphérique,
un corps sphérique (93) concentrique par rapport à la forme sphérique du boîtier étant disposé à déplacement dans le boîtier (91),
le corps sphérique (93) étant fixé sur l'élément de support (2) et étant entraîné par rapport au boîtier (91) en rotation conjointe avec la rotation de l'élément de support (2).

15. Appareil d'affichage portable doté d'un ensemble de montage (10) selon l'une des revendications 1 à 6, une source de lumière permettant de former un faisceau lumineux orienté étant disposée dans l'élément de support (2) de l'ensemble de montage (10) et sa direction d'émission pouvant être commandée par commande de l'ensemble de montage (10).
